# EUROPÄISCHE PATENTANMELDUNG

(11) **EP 3 398 492 A1**
(43) Veröffentlichungstag der Anmeldung: **07.11.2018**
(21) Anmeldenummer: 17169228.8
(22) Anmeldetag: 03.05.2017
(51) Int. Cl.: A47J 36/28

(54) **TRANSPORTABLE VORRICHTUNG ZUM ERHITZEN VON LEBENSMITTELN**

(71) Anmelder: Arnold, Uwe, 67069 Ludwigshafen (DE)
(72) Erfinder: Arnold, Uwe, 67069 Ludwigshafen (DE)
(74) Vertreter: Zenz Patentanwälte Partnerschaft mbB

(57) **Zusammenfassung**

Die vorliegende Erfindung betrifft eine transportable Vorrichtung zum Erhitzen von Lebensmitteln. Bei bekannten Vorrichtungen stellt sich das Problem, dass die chemische Verbindung, mit der die Wärme erzeugt wird, zu schnell und/oder unkontrolliert die Wärme abgibt. Zur Lösung dieses Problems umfasst die erfindungsgemäße Vorrichtung einen Behälter (10) zum Aufnehmen der Lebensmittel (20), einen Erhitzungsraum (1, 2), der über eine wärmeleitende Wandung (11, 12) mit dem Behälter (10) thermisch gekoppelt ist, wobei sich in dem Erhitzungsraum (2) Calciumoxid befindet, und eine Flüssigkeitszuführeinrichtung (30) mit einer Flüssigkeitsvorratskammer (33), in welcher eine Wasser enthaltende Flüssigkeit angeordnet ist, wobei die Flüssigkeitszuführeinrichtung (30) derart ausgebildet ist, dass aufgrund einer Betätigung seitens eines Benutzers die Wasser enthaltende Flüssigkeit mit dem Calciumoxid oder der Calciumoxid enthaltenden Stoffmischung in Kontakt gebracht wird. Erfindungsgemß weist die Wasser enthaltende Flüssigkeit eine gegenüber Wasser erhöhte dynamische Viskosität zwischen 2 und 1000 mPas auf, oder, alternativ, umfasst die Flüssigkeitszuführeinrichtung ein Wasserretentionsmittel. Bei beiden Alternativen Lösungen ist die Reaktion zwischen Calciumoxid und Wasser gedämpft und verzögert.

## Beschreibung

Die vorliegende Erfindung betrifft eine transportable Vorrichtung zum Erhitzen von Lebensmitteln.

Aus der WO 2014/044609 A1 ist eine transportable Vorrichtung zum Erhitzen von Lebensmitteln bekannt. Diese umfasst unter anderem einen Erhitzungsraum, in welchem Calciumoxid oder eine Calciumoxid enthaltende Stoffmischung angeordnet ist. Der Erhitzungsraum bildet oder umfasst zumindest abschnittsweise einen Behälter und ist mit diesem thermisch gekoppelt und hermetisch von diesem getrennt. Das in dem Erhitzungsraum angeordnete Calciumoxid oder die Calciumoxid enthaltende Stoffmischung wird aktiviert, indem Wasser mit dem Calciumoxid oder der Calciumoxid enthaltenden Stoffmischung in Kontakt gebracht wird.

Das Calciumoxid (der Stoffmischung) reagiert mit dem Wasser unter Freisetzen von Wärme zu Calciumhydroxid. Die bei der Reaktion entstehende Wärme wird über eine wärmeleitende Wandung des Erhitzungsraumes auf das Lebensmittel übertragen. Um zu vermeiden, dass die Reaktion zwischen dem Wasser und dem Calciumoxid (der Stoffmischung) zu heftig oder zu schwach ist, ist es bei der bekannten Vorrichtung notwendig, die genaue Reaktivität des verwendeten Calciumoxides zu ermitteln, um in Abstimmung auf die Reaktivität die Wassermenge einzustellen. Dies macht es erforderlich, dass verschiedene Chargen von Calciumoxid vor deren Verwendung vermessen werden müssen, was die Massenherstellung der transportablen Vorrichtung erschwert.

Ein weiterer Nachteil ist, dass bei dem in Kontaktbringen des Calciumoxides (der Stoffmischung) mit dem Wasser die stattfindende Reaktion sehr schnell sehr heftig verläuft, so dass sehr hohe Temperaturen auftreten, die lokale Verbrennungen der Lebensmittel bedingen können. Die Heftigkeit (bzw. Schnelligkeit) der anfänglichen Reaktion bedingt, dass die Reaktion nur über einen relativ kurzen Zeitraum Wärme auf das Lebensmittel überträgt.

Es ist daher Aufgabe der vorliegenden Erfindung, eine transportable Vorrichtung und ein entsprechendes Verfahren zum Erhitzen von Lebensmitteln bereit zu stellen, bei welcher die Erhitzungsreaktion moderiert und über einen längeren Zeitraum verläuft. Es gilt also zu vermeiden, dass das Calciumoxid (der Stoffmischung) unmittelbar nach in Kontakt Bringen mit dem Wasser zu heftig reagiert und die Reaktion bereits nach einem relativ kurzen Zeitraum beendet ist.

Die Aufgabe wird erfindungsgemäß gelöst durch eine transportable Vorrichtung der Patentansprüche 1 und 2. Die transportable Vorrichtung zum Erhitzen von Lebensmitteln umfasst einen Behälter zum Aufnehmen der Lösungsmittel sowie einen an den Behälter angrenzenden Erhitzungsraum, der über eine wärmeleitende Wandung mit dem Behälter thermisch gekoppelt und zugleich hermetisch von diesem getrennt ist, wobei sich in dem Erhitzungsraum Calciumoxid oder eine Calciumoxid enthaltende Stoffmischung befindet, das bzw. die bei Kontakt mit Wasser in einer exothermen chemischen Reaktion Wärme erzeugt. Die transportable Vorrichtung umfasst ferner eine Flüssigkeitszuführeinrichtung mit einer Flüssigkeitsvorratskammer, in welcher eine Wasser enthaltende Flüssigkeit angeordnet ist, wobei die Flüssigkeitszuführeinrichtung derart ausgebildet ist, dass aufgrund einer Betätigung seitens eines Benutzers die Wasser enthaltende Flüssigkeit mit dem Calciumoxid oder der Calciumoxid enthaltenden Stoffmischung in Kontakt gebracht wird.

Erfindungsgemäß weist die Wasser enthaltende Flüssigkeit eine gegenüber Wasser erhöhte dynamische Viskosität zwischen 2 und 1000 mPas auf.

Überraschenderweise wurde festgestellt, dass bei der Erhöhung der dynamischen Viskosität der Wasser enthaltenden Flüssigkeit bei dem in Kontakt Treten der Wasser enthaltenden Flüssigkeit mit dem Calciumoxid oder der Calciumoxid enthaltenden Stoffmischung die Reaktion zwischen dem Calciumoxid (der Stoffmischung) und dem Wasser der Wasser enthaltenden Flüssigkeit verlangsamt ist, wodurch weniger Hitze entsteht. Gleichzeitig hält die exotherme Reaktion zwischen dem Calciumoxid (der Stoffmischung) und dem Wasser länger an, so dass über einen längeren Zeitraum Wärme zum Erhitzen der Lebensmittel bereitsteht.

Ferner wurde überraschenderweise festgestellt, dass bei Verwendung einer Wasser enthaltenden Flüssigkeit mit einer dynamischen Viskosität zwischen 2 und 1000 mPas die Reaktivität des Calciumoxides (der Stoffmischung) keinen wesentlichen Einfluss mehr auf die Reaktion zwischen Calciumoxid (der Stoffmischung) und Wasser hat, so dass ein Vermessen der jeweils verwendeten Chargen an Calciumoxid entfällt, so dass die Massenproduktion der transportablen Vorrichtung erheblich vereinfacht und kostengünstiger ist.

Die oben genannten Probleme werden also dadurch gelöst, dass die Viskosität der Wasser enthaltenden Lösung erhöht wird. Die Erfindung betrifft ferner eine alternative Lösung der oben genannten Probleme. Dazu ist es erfindungsgemäß vorgesehen, dass die Flüssigkeitszuführeinrichtung ein Wasserretentionsmittel umfasst. Überraschenderweise wurde festgestellt, dass bei dem in Kontaktbringen einer Wasser enthaltenden Lösung, die ferner ein Wasserretentionsmittel umfasst, mit Calciumoxid (der Stoffmischung) sich ähnliche Effekte ergeben, die sich auch bei der Verwendung einer Wasser enthaltenden Flüssigkeit mit einer dynamischen Viskosität zwischen 2 und 1000 mPas ergeben. Mit anderen Worten, die Reaktion ist zu Beginn deutlich gedämpft und hält über einen längeren Zeitraum an. Auch bei dem in Kontakt Bringen einer Wasser enthaltenden Flüssigkeit mit einem Wasserretentionsmittel ist überraschenderweise die Reaktivität des Calciumoxides (der Stoffmischung) nicht von Bedeutung, hat also nicht, wie es bei der transportablen Vorrichtung gemäß dem Stand der Technik der Fall ist, maßgeblichen Einfluss auf den Reaktionsverlauf zwischen dem Calciumoxid (der Stoffmischung) und dem Wasser der Wasser enthaltenden Flüssigkeit.

Das Wasserretentionsmittel kann in der Wasser enthaltenden Flüssigkeit gelöst oder suspendiert sein. Alternativ kann die Flüssigkeitszuführeinrichtung eine Wasserretentionsmittel-Kammer umfassen, die derart angeordnet ist, dass bei einer Betätigung seitens eines Benutzers die Wasser enthaltende Flüssigkeit vor dem in Kontakt Bringen mit dem Calciumoxid oder der Calciumoxid enthaltenden Stoffmischung mit dem Wasserretentionsmittel in Kontakt gebracht wird.

Welche der beiden Ausführungsformen der erfindungsgemäßen transportablen Vorrichtung verwendet wird, ist abhängig von dem Wasserretentionsmittel als solchem. Einige Wasserretentionsmittel zersetzen sich mit der Zeit als wässrige Lösung, so dass deren Wirkungsweise nachlässt. Bei diesen Wasserretentionsmitteln ist es bevorzugt, dass diese erst kurz vor dem in Kontakt Bringen der Wasser enthaltenden Flüssigkeit mit dem Calciumoxid (der Stoffmischung) mit dieser vermischt werden.

Bei anderen Wasserretentionsmitteln findet ein solches Zersetzen des Mittels in der wässrigen Lösung nicht statt, so dass diese in der Wasser enthaltenden Flüssigkeit gelöst sein können.

Bei einer baulich sehr einfachen Ausführungsform der transportablen Vorrichtung ist die Flüssigkeitsvorratskammer unterhalb des Erhitzungsraumes angeordnet. Durch die Betätigung eines Benutzers kann die in der Flüssigkeitsvorratskammer angeordnete Wasser enthaltende Flüssigkeit einfach mit dem Calciumoxid (der Stoffmischung) in Kontakt gebracht werden.

Erfindungsgemäß ist die Flüssigkeitszuführeinrichtung derart ausgebildet, dass aufgrund einer Betätigung seitens eines Benutzers die Wasser enthaltende Flüssigkeit mit dem Calciumoxid (der Stoffmischung) in Kontakt gebracht werden kann. Um die vorgenannte Funktionalität der Flüssigkeitszuführeinrichtung zu erreichen sind eine Vielzahl von Ausführungsformen denkbar. Beispielsweise kann die Wasser enthaltende Flüssigkeit in einer Ausnehmung in einer Wandung der transportablen Vorrichtung angeordnet sein, und ein in Kontakt bringen mit dem Calciumoxid (der Stoffmischung) kann durch ein Verdrehen der in der Wandung der transportablen Vorrichtung angeordneten Flüssigkeitszuführeinrichtung stattfinden.

Bei einer konstruktiv sehr einfachen Ausführungsform der transportablen Vorrichtung ist die Flüssigkeitsvorratskammer der Flüssigkeitszuführeinrichtung durch eine flüssigkeitsdichte Wandung von dem Calciumoxid (der Stoffmischung) des Erhitzungsraumes getrennt angeordnet, und die Flüssigkeitszuführeinrichtung umfasst darüber hinaus eine Vorrichtung zum Herstellen einer Öffnung in der flüssigkeitsdichten Wandung. Durch eine Betätigung des Benutzers kann mit der vorgenannten Vorrichtung die flüssigkeitsdichte Wandung durchbrochen werden, so dass die Wasser enthaltende Flüssigkeit mit dem Calciumoxid (der Stoffmischung) in Kontakt tritt, wodurch die Reaktion zwischen dem Calciumoxid und dem Wasser einsetzt, Wärme abgegeben wird und so das Lebensmittel in dem Aufnahmeraum erhitzt wird.

Bei der vorgenannten Ausführungsform sind die Flüssigkeitszuführeinrichtung und der Erhitzungsraum (samt dazugehörender Komponenten) als eine einstückige Vorrichtung ausgeführt.

Bei einer alternativen Ausführungsform ist die Flüssigkeitszuführeinrichtung als separates Bauteil der Vorrichtung ausgeführt und umfasst ein Flüssigkeitszuführmittel, welches mit einem Flüssigkeitsaufnahmemittel in einer Außenwandung des Erhitzungsraums zusammenwirken kann. Die Flüssigkeitszuführeinrichtung kann bei dieser Ausführungsform als eine Art Spritze ausgebildet sein, mittels welcher die Wasser enthaltende Flüssigkeit über das Flüssigkeitsaufnahmemittel, das als eine Art Ventil in der Außenwandung des Erhitzungsraumes ausgebildet sein kann, in den Erhitzungsraum eingebracht werden kann. Das Flüssigkeitsaufnahmemittel ist derart ausgebildet, dass sich dieses bei nicht fortgesetztem Zusammenwirken mit dem Flüssigkeitszuführmittel wieder verschließt.

Die Menge des Wasserretentionsmittels, welches der Wasser enthaltenden Flüssigkeit zugesetzt ist oder wird, ist unter anderem davon abhängig, welche Temperaturen bei der Reaktion des Calciumoxides (der Stoffmischung) mit dem Wasser der Wasser enthaltenden Flüssigkeit erreicht werden sollen. Ferner können die Zusammensetzung der Calciumoxid enthaltenden Stoffmischung sowie die Beschaffenheit des Lebensmittels Faktoren für den Mengenanteil sein. Der Mengenanteil des Wasserretentionsmittels muss so gewählt sein, dass die Reaktion zwischen dem Wasser der Wasser enthaltenden Flüssigkeit und dem Calciumoxid (der Stoffmischung) derart verlangsamt ist, dass pro Zeitintervall weniger Reaktionswärme entsteht, und zwar verglichen mit einer Reaktion des Calciumoxides (der Stoffmischung) mit einer Wasser enthaltenden Flüssigkeit ohne Wasserretentionsmittel.

Bei einer bevorzugten Ausführungsform ist das Wasserretentionsmittel gewählt aus einer Gruppe umfassend Superabsorber, Celluloseether, Stärkeether, Guarether, Polyacrylamide, Polyacrylsäuren, Polyvinylalkohole, Stärke, Stärkeether, Gelatine sowie Kombinationen daraus.

Die Auswahl der Wasserretentionsmittel und der eingesetzten Menge(n), erfolgt entsprechend den Anforderungen des zu erwärmenden Lebensmittels und kann durch entsprechende Routineversuche eingestellt werden. Erfindungsgemäß kann ein Wasserretentionsmittel oder eine Mischung aus mehreren verwendet werden.

Die Wasser enthaltende Flüssigkeit umfasst regelmäßig reines Wasser, kann jedoch auch andere Flüssigkeiten umfassen, wobei diese gegebenenfalls von der Art und Weise des verwendeten Wasserretentionsmittels abhängen.

Bei der Reaktion zwischen dem Calciumoxid (der Stoffmischung) und dem Wasser der Wasser enthaltenden Flüssigkeit wird, wie bereits oben beschrieben, Wärme frei. Es handelt sich um eine exotherme Reaktion. Die freiwerdende Wärme kann (in Abhängigkeit von der verwendeten Menge des Calciumoxides) so groß sein, dass ein Teil des Wassers der Wasser enthaltenden Flüssigkeit verdampft.

Aus diesem Grunde ist die transportable Vorrichtung (bzw. der Erhitzungsraum) regelmäßig derart gegenüber der Umgebung abgeschlossen, dass bei einem Überdruck Gas bzw. Wasserdampf aus dem Erhitzungsraum entweichen kann. Dies kann beispielsweise durch ein Ventil geschehen. Alternativ kann die transportable Vorrichtung auch eine Ummantelung (beispielsweise einen Schrumpfschlauch) umfassen, die zwar einen Eintritt von Feuchtigkeit verhindern, ab einem bestimmten Überdruck aber den Austritt von Gas / Wasserdampf ermöglicht. Unabhängig davon, welche genauen baulichen Maßnahmen vorgesehen sind ist dafür zu sorgen, dass ein ggf. entstehender Überdruck abgebaut werden kann, ansonsten aber keine Flüssigkeit / Feuchtigkeit eintreten kann. Da Calciumoxid hygroskopisch ist würde sich dieses bei stetigem Feuchtigkeitseintritt mit der Zeit zersetzen.

Die Menge des während des Erhitzungsvorganges durch Verdampfen austretenden Wassers kann dadurch ermittelt werden, dass das Gewicht der transportablen Vorrichtung vor und nach dem Erhitzungsvorgang ermittelt wird. Es hat sich herausgestellt, dass der Masseverlust bei der erfindungsgemäßen transportablen Vorrichtung deutlich geringer ist, als dies bei der Vorrichtung gemäß dem Stand der Technik der Fall ist, was belegt, dass die Reaktion zwischen dem Calciumoxid (der Stoffmischung) und dem Wasser der Wasser enthaltenden Flüssigkeit erfindungsgemäß gedämpft ist.

Um den Austritt von Wasserdampf weiter zu vermindern und diesen ferner zur Erhitzung des Lebensmittels zu nutzen, ist es bei einer bevorzugten Ausführungsform vorgesehen, dass der Erhitzungsraum eine erste Kammer und eine zweite Kammer aufweist, die durch eine wasserdampfdurchlässige Wandung getrennt sind, wobei sich in der ersten Kammer das Calciumoxid oder die Calciumoxid enthaltende Stoffmischung befindet, und wobei sich in der zweiten Kammer ein Adsorptionsmittel befindet, das aus der ersten Kammer über die wasserdampfdurchlässige Wandung eintretenden Wasserdampf unter Wärmebildung adsorbieren kann. Bei dem Adsorptionsmittel handelt es sich vorzugsweise um ein Zeolith. Dieses ist preisgünstig in großen Mengen zu erhalten.

Damit der Wasserdampf, der bei der Reaktion zwischen Calciumoxid und Wasser entsteht, einfach in die zweite Kammer gelangen kann, ist es bei einer bevorzugten Ausführungsform vorgesehen, dass die zweite Kammer derart über zumindest einem Teil der ersten Kammer angeordnet ist, dass sich die Unterseite der zweiten Kammer über dem nach Zufuhr der Flüssigkeit entstehenden Reaktionsgemisch in der ersten Kammer befindet.

Wie bereits weiter oben angedeutet, war die Reaktivität des Calciumoxides bei der bekannten Vorrichtung ein kritischer Punkt, der eine ständige Anpassung der Vorrichtung an diese Aktivität erforderlich machte. Auch war es bei der bekannten Vorrichtung notwendig, das Calciumoxid bzw. die Calciumoxid enthaltene Stoffmischung als Granulat mit einer engen Korngrößenverteilung zu verwenden. Erfindungsgemäß ist die Verwendung eines Granulates mit einer engen Korngrößenverteilung nicht mehr notwendig, was die Verwendung unterschiedlichster Granulate ermöglicht. Es hat sich jedoch herausgestellt, dass das Calciumoxid oder die Calciumoxid enthaltende Stoffmischung in Granulatform mit einem mittleren Korndurchmesser bzw. einer Körnung von 1-5 mm vorliegen sollte. Bei einer entsprechenden Körnung ist das Verhaken in der Erhitzungskammer nicht wahrscheinlich und die Erhitzung noch ausreichend regelmäßig.

Das oben genannte Problem wird ferner gelöst durch ein Verfahren zum Erhitzen von Lebensmitteln, bei welchem ein Erhitzungsraum mit Calciumoxid oder einer Calciumoxid enthaltenden Stoffmischung bereitgestellt wird, wobei der Erhitzungsraum eine wärmeleitende Wandung aufweist, ein zu erhitzendes Lebensmittel thermisch mit der wärmeleitenden Wandung gekoppelt wird, und das Calciumoxid oder die Calciumoxid enthaltende Stoffmischung mit einer Wasser enthaltenden Flüssigkeit in Kontakt gebracht wird. Erfindungsgemäß hat die Wasser enthaltende Flüssigkeit eine gegenüber Wasser erhöhte dynamische Viskosität zwischen 2 und 1000 mPas und/oder der Wasser enthaltenden Flüssigkeit ist vor oder bei dem in Kontakt Bringen mit dem Calciumoxid oder der Calciumoxid enthaltenden Stoffmischung ein Wasserretentionsmittel zugeführt worden bzw. wird zugeführt.

Im nachfolgenden werden bevorzugte Ausführungsformen der erfindungsgemäßen transportablen Vorrichtung sowie des erfindungsgemäßen Verfahrens unter Bezugnahme auf die Zeichnungen beschrieben, wobei
Figur 1 eine schematische Schnittansicht einer ersten Ausführungsform der erfindungsgemäßen transportablen Vorrichtung zeigt,
Figur 2 eine schematische Schnittansicht einer zweiten Ausführungsform zeigt, und
Figur 3 eine schematische Schnittansicht einer dritten Ausführungsform zeigt.

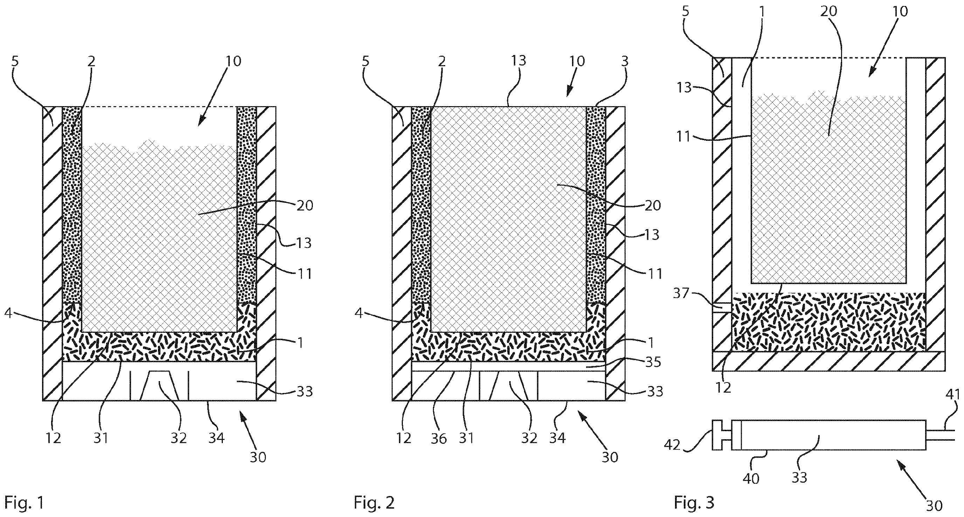

Figur 1 zeigt eine schematische Schnittansicht einer ersten bevorzugten Ausführungsform der transportablen Vorrichtung. Diese umfasst einen nach oben offenen Behälter 10, in welchem sich ein zu erhitzendes Lebensmittel 20 befindet. Der Behälter selbst ist Teil der Vorrichtung, kann also nicht aus dieser entnommen werden. Um den Behälter 10 herum ist ein Erhitzungsraum 1, 2 angeordnet, der sich mit dem Behälter 10 eine innere wärmeleitende Wandung 11 sowie einen Bodenbereich 12 (bezogen auf den Behälter 10) teilt. Über diese Wandung 11 sowie den Bodenbereich 12 ist der Erhitzungsraum mit dem Behälter bzw. dem darin angeordneten Lebensmittel thermisch gekoppelt, jedoch hermetisch von diesem getrennt.

Bei der gezeigten Ausführungsform ist der Außenumfang des Erhitzungsraumes 1, 2 zylinderförmig ausgebildet, und die Außenwandung 13 des Erhitzungsraums 1, 2 ist von einer Isolierschicht 5 umgeben.

Der Erhitzungsraum 1, 2 ist durch eine wasserdampfdurchlässige Wandung 4 in eine untere erste Kammer 1 und eine obere zweite Kammer 2 getrennt. In der zweiten Kammer 2 ist ein Adsorptionsmittel, in diesem Fall ein Zeolith angeordnet. In der ersten Kammer ist ein Calciumoxidgranulat angeordnet, welches bei in Kontakt Treten mit Wasser mit diesem exotherm zu Calciumhydroxid reagiert. Aufgrund der freiwerdenden Hitze verdampft ein Teil des Wassers der Wasser enthaltenden Flüssigkeit. Dieser Wasserdampf kann über die wasserdampfdurchlässige Wandung 4 in die obere zweite Kammer 2 gelangen, in welcher es mit dem Zeolith unter Wärmefreisetzung reagiert, sprich von diesem adsorbiert wird.

Zur Zuführung des Wassers in die untere erste Kammer 1 umfasst die Vorrichtung bei der gezeigten Ausführungsform unterhalb dieser ersten Kammer eine Flüssigkeitszuführeinrichtung 30 mit einer Flüssigkeitsvorratskammer 33, in welcher eine Wasser enthaltende Flüssigkeit angeordnet ist. Die Viskosität der Wasser enthaltenden Flüssigkeit liegt bei der gezeigten Ausführungsform bei ca. 50 mPas. Die Flüssigkeitszuführeinrichtung 30 ist bei der gezeigten Ausführungsform kreiszylinderförmig ausgebildet, wobei sich um die Außenflächen die oben beschriebene Dichtung 5 erstreckt. Den oberen "Deckel" der Flüssigkeitszuführeinrichtung 30 bildet eine flüssigkeitsundurchlässige Wandung 31, die das in der ersten Kammer angeordnete Calciumoxid von der Wasser enthaltenden Flüssigkeit trennt. Der Boden 34 der Flüssigkeitszuführeinrichtung 30 besteht aus einem elastischen Kunststoff, an welchem eine Vorrichtung 32 zum Herstellen einer Öffnung in der flüssigkeitsundurchlässigen Wandung 31 angeordnet ist.

Um die Reaktion zwischen dem Wasser der Wasser enthaltenden Flüssigkeit und dem Calciumoxid in der ersten Kammer 1 des Erhitzungsraumes in Gang zu setzen, muss ein Benutzer den Boden der Flüssigkeitszuführungseinrichtung in Richtung auf das Lebensmittel eindrücken, wodurch die Vorrichtung 32 die flüssigkeitsundurchlässige Wandung 31 zwischen der Flüssigkeitsvorratskammer 33 und der ersten Kammer des Erhitzungsraumes perforiert, so dass Wasser aus der Flüssigkeitsvorratskammer 33 in die erste Kammer eintreten kann.

Um den Übergang der Wasser enthaltenden Flüssigkeit in die erste Kammer 1 des Erhitzungsraumes zu erleichtern, ist es bei der Betätigung des Bodens 34 angezeigt, die Vorrichtung kurz "auf den Kopf" zu drehen. Die Ausgestaltung des Behälters 10 bedingt dabei, dass das Lebensmittel erst nach der Betätigung des Bodens 34 bzw. der Einrichtung 32 eingefüllt wird. Um einen Druckausgleich zu ermöglichen ist der Erhitzungsraum im oberen Bereich nicht absolut gasdicht ausgebildet, sondern erlaubt einen Gausaustritt.

Figur 2 zeigt eine schematische Schnittansicht einer zweiten Ausführungsform. Der generelle Aufbau der Vorrichtung nach der zweiten Ausführungsform entspricht dem der ersten Ausführungsform, so dass nachfolgend lediglich auf die Unterschiede eingegangen wird. Bei der zweiten Ausführungsform ist der Behälter 10 als aus der Vorrichtung als solcher herausnehmbar ausgebildet. Der Behälter 10 wird also nach dem Erhitzen der in dem Behälter 10 angeordneten Lebensmittel 20 aus der Vorrichtung genommen. Der Erhitzungsraum 1, 2 wird dabei "geöffnet", da keine doppelte Wandung bzw. kein doppelter Bodenbereich vorgesehen ist. Bei alternativen Ausführungsformen kann eine solche doppelte Wandung bzw. ein doppelter Bodenbereich vorgesehen sein; beim Herausnehmen des Behälters bleibt der Erhitzungsraum dann geschlossen.

Der Behälter 10 ist über einen oberen Ring 3, der an der Außenwandung befestigt ist, fixiert. Der Ring 3 ist so ausgebildet, dass er den Erhitzungsraum nicht hermetisch gegenüber einem Druckaustritt abschließt, so dass sich beim Erhitzen kein Überdruck in dem Erhitzungsraum aufbauen kann.

Bei der in Figur 2 gezeigten Ausführungsform umfasst die Flüssigkeitszuführeinrichtung 30 wieder eine Flüssigkeitsvorratskammer 33. Über dieser und von dieser durch eine wasserundurchlässige Wandung 36 getrennt, befindet sich eine Wasserretentionsmittel-Kammer 35, in welcher ein Wasserretentionsmittel angeordnet ist. Unter dieser Kammer ist eine Vorrichtung 32 angeordnet, mit welcher die Wandung 36 sowie eine über der Wandung 36 angeordnete weitere Wandung 31 durchstoßen werden können. Bei dieser Ausführungsform wird das Wasserretentionsmittel erst kurz vor dem in Kontakt bringen der Wasser enthaltenden Flüssigkeit mit dem Calciumoxid (der Stoffmischung) in der Flüssigkeit gelöst oder suspendiert.

Figur 3 zeigt eine schematische Schnittansicht einer dritten Ausführungsform. Bei dieser ist der Behälter 10 wieder entsprechend der ersten Ausführungsform ausgebildet. Im Unterschied zu dieser ist die Flüssigkeitszuführeinrichtung 30 aber kein integraler Bestandteil der Vorrichtung, sondern als separates Bauteil der Vorrichtung ausgeführt, welches als eine Art Spritze 40 mit einem Flüssigkeitszuführmittel 41 und einem Druckkörper 42 ausgebildet ist. In der Spritze 30 ist eine Flüssigkeitsvorratskammer 33 ausgebildet, in welcher die Wasser enthaltende Flüssigkeit angeordnet ist. Diese weist eine dynamische Viskosität zwischen 2 und 1000 mPas und/oder ein Wasserretentionsmittel auf. Auch hier kann die Spritze 40 eine Wasserretentionsmittel-Kammer umfassen, die bei Betätigung des Druckkörpers das Wasserretentionsmittel mit der Wasser enthaltenden Flüssigkeit in Kontakt bringt, und zwar während bzw. bevor die Wasser enthaltende Flüssigkeit mit dem Calciumoxid (der Stoffmischung) in Kontakt gebracht wird. Dazu wird die Flüssigkeitszuführeinrichtung 30 über das Flüssigkeitszuführmittel 41 in ein Flüssigkeitsaufnahmemittel 37 in der Wandung 13 eingeführt, das als eine Art Ventil ausgebildet ist. Sobald die Flüssigkeit in den unteren Erhitzungsraum 1 eingeführt ist, wird die Flüssigkeitszuführeinrichtung 30 wieder entfernt und das Flüssigkeitsaufnahmemittel 37 schließt den Erhitzungsraum an dieser Stelle wieder gegenüber der Umwelt.

Eine Ausführungsform des erfindungsgemäßen Verfahrens sei anhand von Figur 2 kurz erläutert. Zunächst wird die Vorrichtung kurz auf den Kopf gedreht und ein Benutzer drückt den Boden 34 der Flüssigkeitszuführeinrichtung 30 kurz ein, wodurch die beiden Wandungen 36, 31 durchbohrt werden und die Wasser enthaltende Flüssigkeit mit dem Wasserretentionsmittel in den Erhitzungsraum 1, 2 gelangt. Im Anschluss kann die Vorrichtung wieder gedreht werden. Die bei der Reaktion des Wassers mit dem Calciumoxid entstehende Wärme überträgt sich über die Bodenfläche 12 und die Wandung 11 auf das Lebensmittel 20 in dem Behälter. Der bei der Reaktion entstehende Wasserdampf tritt durch die Wandung 4 in die obere Kammer 2 des Erhitzungsraums, reagiert mit dem Zeolith durch Adsorption an diesem, wobei weitere Wärme entsteht, die auf das Lebensmittel übertragen wird. Nach Beendigung der Reaktion wird der Behälter entnommen, das Lebensmittel kann verzehrt werden.

In Abhängigkeit von dem Inhalt des Behälters 10 kann dieser auch vor der Reaktion mehr oder weniger stark geöffnet werden um ggf. ein Umrühren während des Erwärmens zu ermöglichen.

Nachfolgend seien zwei Beispiele für eine erfindungsgemäße Vorrichtung dargelegt, und zwar bezogen auf die verwendeten Stoffmengen. Als Quelle für das Calciumoxid wird gebrannter Kalk mit einer durchschnittlichen Körnung von 1 - 5 mm verwendet. Das Wasser hat eine dynamische Viskosität von 10 mPas.
A. Dose mit 400 g Inhalt

| | |
|---|---|
| Wasser: | 40 - 45 ml |
| Kalk: | 90 g |
| Zeolith: | 50 - 60 g |

B. Dose mit 150 ml Inhalt

| | |
|---|---|
| Wasser: | ca. 30 ml |
| Kalk: | 30 - 35 g |
| Zeolith: | 20 g |

Bei Verwendung eines Wasserretentionsmittels hängt die Menge des verwendeten Wasserretentionsmittels u.a. von dessen Beschaffenheit ab und kann von einem Fachmann mittels Routineversuchen einfach ermittelt werden. Wenn beispielsweise Methylcellulose verwendet wird können 0,5 - 1,0 Gew-%, bezogen auf die Wasser enthaltende Flüssigkeit, ausreichend sein.

Im Rahmen der vorliegenden Erfindung ist unter dem Begriff "Viskosität" immer die dynamische Viskosität (η) zu verstehen, die die Einheit N·s·m⁻² = Pa•s bzw. mN·s·m⁻² = mPa•s hat.

Die Viskosität kann durch eine Vielzahl dem Fachmann bekannter Methoden bestimmt werden. Bspw. lässt sich die dynamische Viskosität mit Hilfe eines Kapillarviskosimeters, eines Fallkörperviskosimeters oder eines Rotationsrheometers bestimmen. Eine umfassende Darstellung zur Bestimmung der Viskosität findet sich in Meichsner, G. / Mezger, T. G. / Schröder, J. (1997) Lackeigenschaften messen und steuern. In Zorll, U. (Hrsg.), Rheometrie (S. 50-81). Alle in dieser Anmeldung aufgeführten Viskositäten beziehen sich auf Raumtemperatur (20 °C), sofern nicht ausdrücklich etwas Anderes angegeben ist.

## Patentansprüche

1. Transportable Vorrichtung zum Erhitzen von Lebensmitteln, aufweisend:
einen Behälter (10) zum Aufnehmen der Lebensmittel (20),
einen an den Behälter (1) angrenzenden Erhitzungsraum (1, 2), der über eine wärmeleitende Wandung (11, 12) mit dem Behälter (10) thermisch gekoppelt und zugleich hermetisch von diesem getrennt ist, wobei sich in dem Erhitzungsraum (2) Calciumoxid oder eine Calciumoxid enthaltende Stoffmischung befindet, das bzw. die bei Kontakt mit Wasser in einer exothermen chemischen Reaktion Wärme erzeugt, und
eine Flüssigkeitszuführeinrichtung (30) mit einer Flüssigkeitsvorratskammer (33), in welcher eine Wasser enthaltende Flüssigkeit angeordnet ist, wobei die Flüssigkeitszuführeinrichtung (30) derart ausgebildet ist, dass aufgrund einer Betätigung seitens eines Benutzers die Wasser enthaltende Flüssigkeit mit dem Calciumoxid oder der Calciumoxid enthaltenden Stoffmischung in Kontakt gebracht wird,
**dadurch gekennzeichnet,**
**dass** die Wasser enthaltende Flüssigkeit eine gegenüber Wasser erhöhte dynamische Viskosität zwischen 2 und 1000 mPas aufweist.

2. Transportable Vorrichtung zum Erhitzen von Lebensmitteln, aufweisend:
einen Behälter (10) zum Aufnehmen der Lebensmittel (20),
einen an den Behälter (10) angrenzenden Erhitzungsraum (1, 2), der über eine wärmeleitende Wandung (11, 12) mit dem Behälter (10) thermisch gekoppelt und zugleich hermetisch von diesem getrennt ist, wobei sich in dem Erhitzungsraum (1, 2) Calciumoxid oder eine Calciumoxid enthaltende Stoffmischung befindet, das bzw. die bei Kontakt mit Wasser in einer exothermen chemischen Reaktion Wärme und Wasserdampf erzeugt, und
eine Flüssigkeitszuführeinrichtung (30) mit einer Flüssigkeitsvorratskammer (33), in welcher eine Wasser enthaltende Flüssigkeit angeordnet ist, wobei die Flüssigkeitszuführeinrichtung derart ausgebildet ist, dass aufgrund einer Betätigung seitens eines Benutzers die Wasser enthaltende Flüssigkeit mit dem Calciumoxid oder der Calciumoxid enthaltenden Stoffmischung in Kontakt gebracht wird,
**dadurch gekennzeichnet,**
**dass** die Flüssigkeitszuführeinrichtung (30) ein Wasserretentionsmittel umfasst.

3. Transportable Vorrichtung zum Erhitzen von Lebensmitteln nach Anspruch 2, **dadurch gekennzeichnet, dass** das Wasserretentionsmittel in der Wasser enthaltenden Flüssigkeit gelöst oder suspendiert ist.

4. Transportable Vorrichtung zum Erhitzen von Lebensmitteln nach Anspruch 2, **dadurch gekennzeichnet, dass** die Flüssigkeitszuführeinrichtung (30) eine Wasserretentionsmittel-Kammer (35) umfasst, die derart angeordnet ist, dass bei einer Betätigung seitens eines Benutzers die Wasser enthaltende Flüssigkeit vor dem in Kontakt bringen mit dem Calciumoxid oder der Calciumoxid enthaltenden Stoffmischung mit dem Wasserretentionsmittel in Kontakt gebracht wird.

5. Transportable Vorrichtung zum Erhitzen von Lebensmitteln nach einem der Ansprüche 1 - 4, **dadurch gekennzeichnet, dass** die Flüssigkeitsvorratskammer (33) unterhalb des Erhitzungsraums (1, 2) angeordnet ist.

6. Transportable Vorrichtung zum Erhitzen von Lebensmitteln nach einem der Ansprüche 1 - 5, **dadurch gekennzeichnet, dass** die Flüssigkeitsvorratskammer (33) durch eine flüssigkeitsdichte Wandung (31) von dem das Calciumoxid oder die Calciumoxid enthaltende Stoffmischung enthaltenden Teil des Erhitzungsraums (1, 2) getrennt angeordnet ist, und dass die Flüssigkeitszuführeinrichtung (30) eine Vorrichtung (32) zum Herstellen einer Öffnung in der flüssigkeitsdichten Wandung umfasst.

7. Transportable Vorrichtung zum Erhitzen von Lebensmitteln nach einem der Ansprüche 1 - 4, **dadurch gekennzeichnet, dass** die Flüssigkeitszuführeinrichtung (30) als separates Bauteil der Vorrichtung ausgeführt ist und ein Flüssigkeitszuführmittel (41) umfasst, welches mit einem Flüssigkeitsaufnahmemittel (37) in der Außenwandung (13) des Erhitzungsraumes (1, 2) zusammenwirkt.

8. Transportable Vorrichtung zum Erhitzen von Lebensmitteln nach einem der Ansprüche 2 - 7, **dadurch gekennzeichnet, dass** der Mengenanteil des der Wasser enthaltenden Flüssigkeit zugemischten Wasserretentionsmittels so gewählt ist, dass die Reaktion zwischen dem Wasser der Wasser enthaltenden Flüssigkeit und dem Calciumoxid oder der Calciumoxid umfassenden Stoffmischung derart verlangsamt, dass pro Zeitintervall weniger Reaktionswärme entsteht.

9. Transportable Vorrichtung zum Erhitzen von Lebensmitteln nach einem der Ansprüche 2 - 8, **dadurch gekennzeichnet, dass** das Wasserretentionsmittel wenigstens einen Stoff aus einer Gruppe umfasst, die Superabsorber, Celluloseether, Stärkeether, Guarether, Polyacrylamide, Polyacrylsäure, Polyvinylalkohol, Stärke und Gelatine umfasst.

10. Transportable Vorrichtung zum Erhitzen von Lebensmitteln nach einem der Ansprüche 1 - 9, **dadurch gekennzeichnet, dass** der Erhitzungsraum (1, 2) eine erste Kammer (1) und eine zweite Kammer (2) aufweist, die durch eine wasserdampfdurchlässige Wandung (4) getrennt sind,
wobei sich in der ersten Kammer (1) das Calciumoxid oder die Calciumoxid enthaltende Stoffmischung befindet, und
wobei sich in der zweiten Kammer (2) ein Adsorptionsmittel (10) befindet, das aus der ersten Kammer (1) über die wasserdampfdurchlässige Wandung (4) eintretenden Wasserdampf unter Wärmebildung adsorbieren kann.

11. Transportable Vorrichtung zum Erhitzen von Lebensmitteln nach Anspruch 9, **dadurch gekennzeichnet, dass** die zweite Kammer (2) derart über zumindest einem Teil der ersten Kammer (1) angeordnet ist, dass sich die Unterseite der zweiten Kammer (2) über dem nach Zufuhr der Flüssigkeit entstehenden Reaktionsgemisch in der ersten Kammer (1) befindet.

12. Transportable Vorrichtung zum Erhitzen von Lebensmitteln nach einem der Ansprüche 1 - 11, **dadurch gekennzeichnet, dass** das Calciumoxid oder die Calciumoxid enthaltende Stoffmischung ein Granulat mit einer Körnung von 1 - 5 mm ist.

13. Verfahren zum Erhitzen von Lebensmitteln, wobei
ein Erhitzungsraum (1, 2) mit Calciumoxid oder einer Calciumoxid enthaltenden Stoffmischung bereitgestellt wird, wobei der Erhitzungsraum (1, 2) eine wärmeleitende Wandung (11, 12) aufweist,
ein zu erhitzendes Lebensmittel (20) thermisch mit der wärmeleitenden Wandung (11, 12) gekoppelt wird, und
das Calciumoxid oder die Calciumoxid enthaltende Stoffmischung mit einer Wasser enthaltenden Flüssigkeit in Kontakt gebracht wird, wobei
die Wasser enthaltende Flüssigkeit eine gegenüber Wasser erhöhte dynamische Viskosität zwischen 2 und 1000 mPas aufweist und/oder
der Wasser enthaltenden Flüssigkeit vor oder bei dem in Kontakt bringen mit dem Calciumoxid oder der Calciumoxid enthaltenden Stoffmischung ein Wasserretentionsmittel zugeführt wurde bzw. wird.
